# DEMANDE DE BREVET EUROPEEN

(11) **EP 1 702 836 A1**
(43) Date de publication de la demande: **20.09.2006**
(21) Numéro de dépôt: 06300242.2
(22) Date de dépôt: 17.03.2006
(51) Int. Cl.: B62D 61/12, B62D 53/02, B60P 1/02

(54) **Véhicule léger de chantier à six roues**

(30) Priorité: 17.03.2005 FR 0550682
(71) Demandeur: Coeuret, Bernard, 14310 Epinay sur Odon (FR)
(72) Inventeur: Coeuret, Bernard, 14310 Epinay sur Odon (FR)
(74) Mandataire: Herrburger, Pierre

(57) **Abrégé**

Véhicule léger de chantier à au moins six roues motrices, comprenant un châssis avant (1) équipé de roues motrices non directrices, et portant le poste de conduite, un châssis arrière (3) équipé de roues motrices non directrices, recevant un équipement, une articulation d'axe vertical (ZZ) entre le châssis avant (1) et le châssis arrière (3) constituant une articulation de direction, une articulation d'axe horizontal entre les deux châssis, et au moins un vérin de direction reliant les deux parties de l'articulation de direction en laissant libre l'articulation horizontale, caractérisé en ce que le châssis arrière (3) est équipé de deux paires de roues et de leur moteur hydraulique associé, les deux roues d'une paire étant portées chacune par l'extrémité d'un balancier (23) longitudinal, relié au châssis (3) par un axe d'articulation transversal (24), un vérin (28) monté entre le châssis et le balancier commandant la position du balancier autour de son articulation.

## Description

### Domaine de l'invention

La présente invention concerne un véhicule léger de chantier à au moins six roues motrices, comprenant un châssis avant équipé de roues motrices non directrices, et portant le poste de conduite, un châssis arrière équipé de roues motrices non directrices, recevant un équipement, une articulation d'axe vertical entre le châssis avant et le châssis arrière constituant une articulation de direction, une articulation d'axe horizontal entre les deux châssis, et au moins un vérin de direction reliant les deux parties de l'articulation de direction en laissant libre l'articulation horizontale.

### Etat de la technique

On connaît déjà différents véhicules de chantier notamment un véhicule articulé décrit au document FR 03 02 767.

### But de la présente invention

La présente invention a pour but de développer un véhicule articulé offrant des possibilités de stabilisation du châssis arrière sur un terrain accidenté ou facilitant les manoeuvres d'installation et d'enlèvement d'accessoires sur le châssis arrière sans avoir à soulever les accessoires entre leur position d'attente ou de stockage et la position permettant leur mise en place sur le châssis du véhicule.

### Exposé et avantages de l'invention

A cet effet la présente invention concerne un véhicule du type défini ci-dessus caractérisé en ce que le châssis arrière est équipé de deux paires de roues et de leur moteur hydraulique associé, les deux roues d'une paire étant portées chacune par l'extrémité d'un balancier longitudinal, relié au châssis par un axe d'articulation transversal, un vérin monté entre le châssis et le balancier commandant la position du balancier autour de son articulation.

L'articulation des paires de roues du châssis arrière par un balancier commandé par un vérin permet de relever ou de stabiliser le châssis pour le repositionner sur un terrain très irrégularité, par exemple pour déverser une benne ou pour effectuer des travaux à l'aide d'une grue installée sur le châssis arrière. Outre cette stabilisation statique, le montage des paires de roues sur un balancier permet également un meilleur suivi du terrain accidenté et des manoeuvres de soulèvement du châssis pour le montage ou le démontage d'équipements tels que la benne, une grue ou autres accessoires, sans utiliser d'engins de levage. Cette facilité d'installation par un simple relèvement ou descente du châssis arrière permet des changements rapides d'équipement avec un personnel réduit ; le conducteur du véhicule peut dans la plupart des circonstances effectuer seul l'opération de changement d'équipement.

Suivant une autre caractéristique avantageuse, une bielle solidaire du balancier au niveau de son axe de pivotement et reliée au vérin prenant appui sur le châssis pour pivoter le balancier. Cette bielle facilite l'installation du vérin en position protégée à côté ou de façon intégrée dans le châssis. En particulier si chaque côté du châssis arrière est formé par deux paires de longerons laissant entre eux un intervalle, le longeron extérieur porte les deux chapes recevant l'axe d'articulation du balancier, l'axe du balancier est muni solidairement d'une patte venant dans l'intervalle des deux longerons du côté correspondant du châssis et le vérin d'articulation du balancier logé entre les longerons du côté correspondant du châssis est articulé au châssis et à la patte du balancier.

Suivant une autre caractéristique avantageuse, le balancier est formé par un caisson plat muni à ses deux extrémités d'un boîtier cylindrique recevant un moteur hydraulique de roue et d'un axe d'articulation, situé entre les deux boîtiers cylindriques de roue, et l'articulation du balancier est montée dans deux chapes du châssis arrière.

De façon à faciliter le mouvement du balancier, avoir un appui aussi large que possible dans la direction transversale, l'axe d'articulation du balancier est déporté au-delà du caisson du balancier sur le côté du balancier tourné vers l'intérieur du châssis.

Suivant une autre caractéristique avantageuse, le vérin est relié à une commande comprenant un capteur de basculement autour de l'articulation horizontale pour commander le vérin du balancier et corriger son basculement et ainsi le pivotement du châssis autour de l'axe horizontal.

Suivant une autre caractéristique, le vérin est muni d'un amortisseur et en position de roulage, le circuit hydraulique du vérin est relié à cet amortisseur.

Suivant une autre caractéristique avantageuse, une électrovanne coupant le branchement de l'amortisseur sur le vérin pour la position de soulèvement/abaissement du balancier.

Le circuit hydraulique des vérins des balanciers est également relié avantageusement à deux ensembles symétriques 30, 31 constituant un dispositif de sécurité pour le pivotement du châssis arrière autour de l'axe horizontal XX, chaque ensemble 30, 31 se composant d'un pion 301, 311 porté par une partie fixe du châssis arrière 3 et coopérant avec au moins un contact 302, 303 ; 312, 313 pour porter la partie 51 de l'articulation horizontale solidaire du châssis avant, pour actionner successivement l'un des contacts en fonction du degré de pivotement du châssis arrière par rapport à l'axe XX et interdire tout pivotement excessif ou commander l'inversion du mouvement de pivotement par les vérins 28 d'actionnement des balanciers 23.

### Dessins

La présente invention sera décrite ci-après de manière plus détaillée à l'aide d'un exemple de réalisation représenté schématiquement dans les dessins annexés dans lesquels :
- la figure 1 est une vue en perspective du véhicule en position de virage,
- la figure 2 est une vue en perspective du châssis arrière du véhicule sans équipement tel qu'une benne,
- la figure 3 est une vue de dessus du châssis arrière,
- la figure 4 est une vue de côté, coupée, partielle du châssis arrière et de l'articulation du balancier,
- la figure 5 est une demi-coupe verticale du châssis arrière au droit de l'axe du balancier,
- la figure 6 est une vue en perspective du châssis arrière montrant l'articulation avant et le dispositif de sécurité de pivotement autour de l'axe horizontal,
- les figures 7, 8 montrent deux positions extrêmes de basculement du balancier.

### Description d'un mode de réalisation

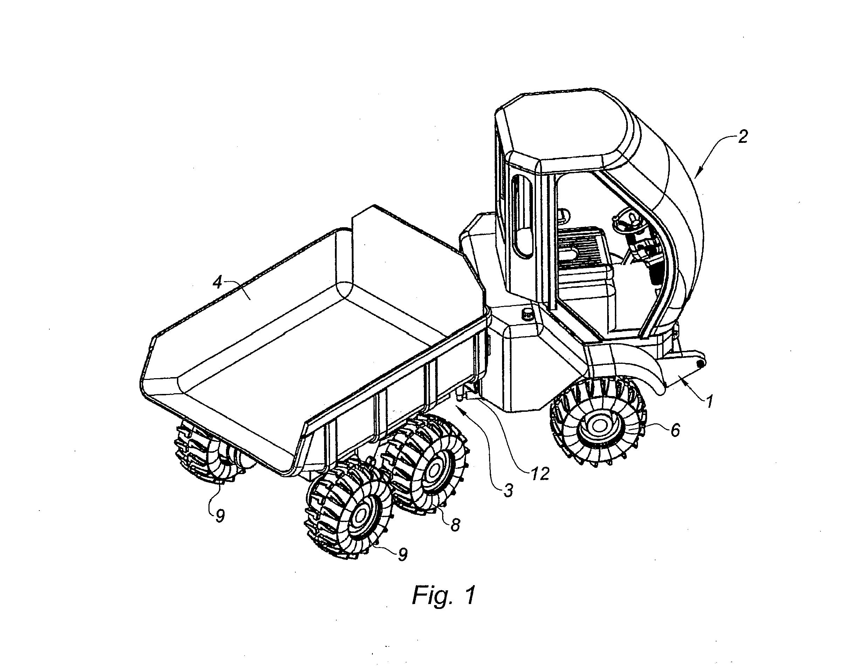

Selon la figure 1, un mode de réalisation d'un véhicule léger de chantier à six roues motrices se compose d'un châssis avant 1 portant une cabine 2 avec un poste de conduite et un châssis arrière 3 portant un équipement, notamment amovible, par exemple une benne 4.

Le châssis avant 1 est muni de roues 6 et le châssis arrière, de roues 8, 9. Ces roues sont portées chacune par un moteur hydraulique. Elles ne sont pas associées à un essieu et aucune des roues n'est directrice.

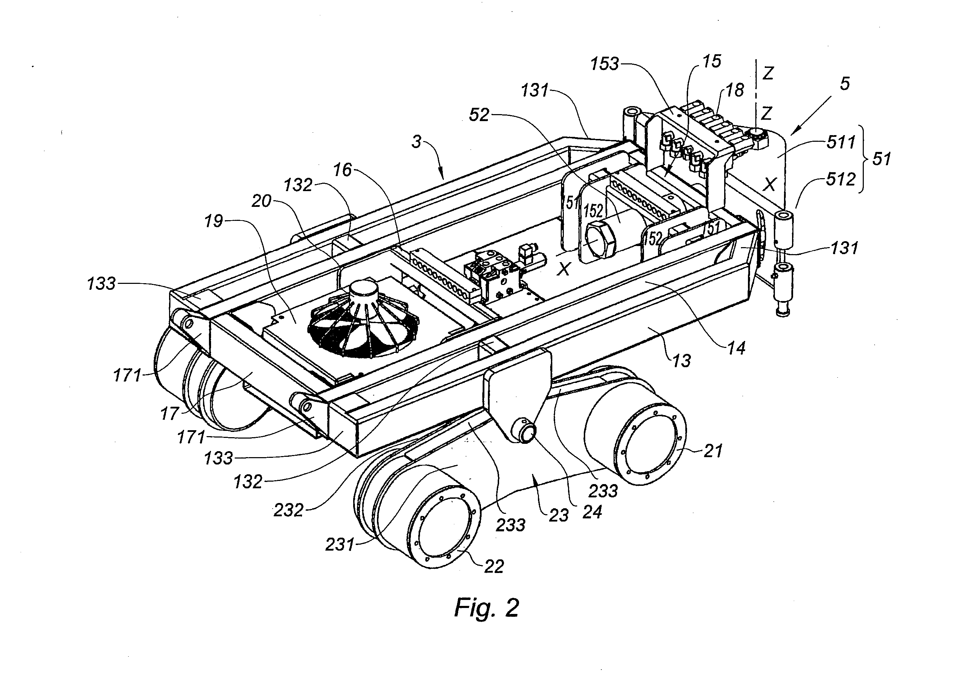

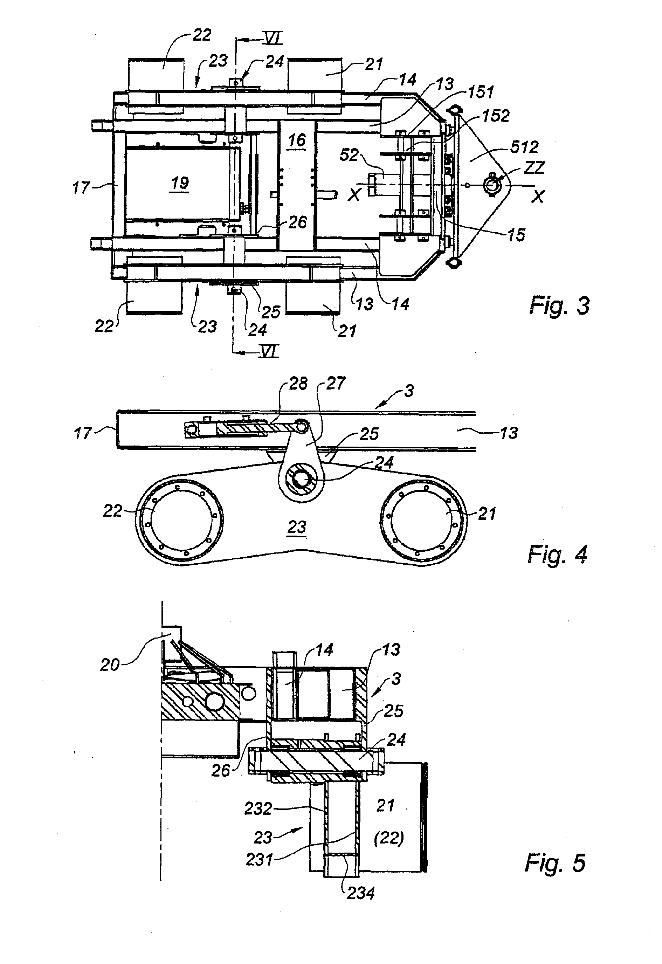

Les figures 2 et 3 ne montrent que le châssis arrière 3 et la partie d'articulation de direction 5, d'axe vertical ZZ, associée au châssis arrière 3. Elle se compose de la partie 51 ayant, en section verticale, une forme de C constituant une chape supérieure 511 et une chape inférieure 512 formant une articulation de grande section avec une couronne de billes ou de galets, non représentée, coaxiale à l'axe ZZ. Cette articulation de direction est complétée par une articulation 52 d'axe horizontal XX (figures 2 et 3) permettant un mouvement de torsion d'un châssis (1, 3) par rapport à l'autre (3, 1). Pour cela la partie arrière 51 de l'articulation 5 est reliée à l'articulation horizontale 52 portée par le châssis arrière 3.

Le braquage se fait par le pivotement d'un châssis (1, 3) par rapport à l'autre (3, 1), commandé par un ou deux vérins de braquage 12 (figure 1) agissant sur les deux parties de l'articulation de direction 5.

Le châssis arrière 3 symétrique est formé de deux doubles longerons (13, 14) se rejoignant à l'avant par une partie en biais 131, sont aussi reliés par une entretoise intermédiaire 132 et une entretoise arrière 133. Les paires de doubles longerons 13, 14 sont reliés à une traverse avant 15, une traverse intermédiaire 16 et une traverse arrière 17. La traverse avant 15 porte la partie arrière 51 de l'articulation horizontale 5 ainsi que les chapes 151-152 pour les vérins de soulèvement de la benne et un appui 153 pour la benne 4. A l'arrière, le châssis comporte des chapes d'articulation 171 de la benne non représentée.

Le châssis 3 est également équipé des différentes électrovannes 18 des circuits hydrauliques et du radiateur d'huile 19 avec son ventilateur 20.

Les figures 2 à 6 montrent tout particulièrement le montage des roues du châssis arrière sur un balancier ainsi que l'environnement de ces roues arrières.

Les roues, ne sont pas représentées aux figures 2 à 6 mais seulement les fûts cylindriques 21-22 logeant les moteurs hydrauliques portant les roues. La figure 4 montre tout particulièrement la disposition des balanciers 23 sous le longeron 13 du double longeron 13, 14 de chaque côté du châssis. La figure 5 est une vue en coupe dans l'intervalle des deux longerons 13, 14 montrant la disposition du vérin 28 attaquant la patte 27 solidaire du balancier 23.

De manière plus détaillée les deux fûts 21, 22 de chaque côté du châssis 3 sont montés dans un balancier 23 en forme de caisson. Le caisson de chaque balancier 23 se compose de deux flancs 231, 232 reliés par des lames intercalaires hautes et basses 233, 234. Les fûts 21-22 encastrés dans les caissons du balancier 23 sont soudés à ceux-ci. Chaque balancier 23 est relié en son milieu à un axe d'articulation 24 porté par deux chapes 25-26 fixées de part et d'autre des deux longerons 13, 14. Chaque balancier 23 porte solidairement une patte 27 reliée à l'extrémité d'un vérin 28 susceptible de commander le pivotement du balancier 23 autour de l'axe d'articulation 24. Ce vérin 28 logé entre deux longerons 13, 14 est intégré dans un circuit hydraulique.

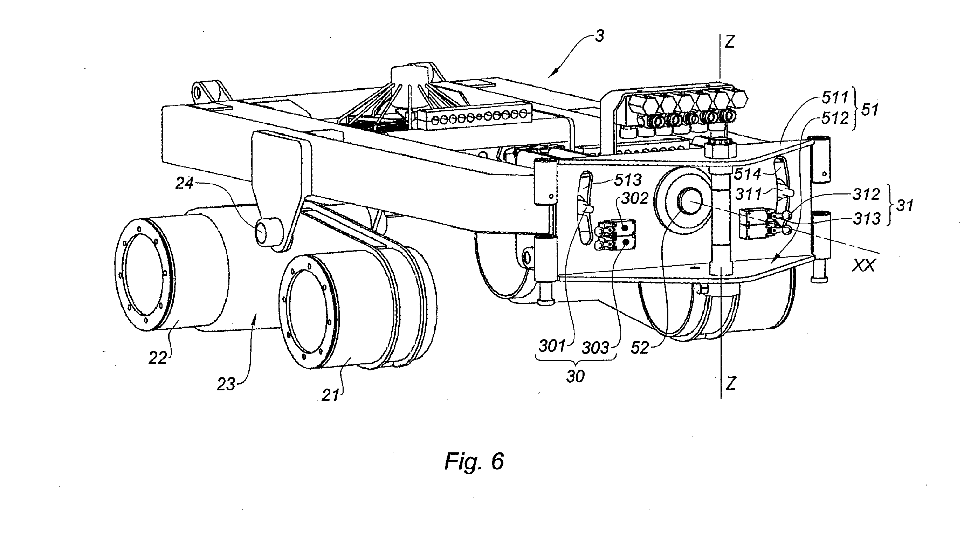

La demi vue en coupe verticale selon VI-VI de la figure 4 représentée à la figure 6 montre le montage déporté des fûts 21, 22 et du balancier 23 vers l'extérieur par rapport au double longeron 13, 14 du châssis arrière 3, à la verticale du longeron 13. La patte 27 du balancier n'apparaît pas dans cette figure.

Cette figure montre également l'axe d'articulation 24 du balancier 23 logé dans les deux chapes 25, 26 fixées respectivement aux côtés extérieur et intérieur des longerons 13, 14 de façon à avoir un appui aussi large que possible pour le palier de l'axe 24.

Les balanciers 23 peuvent être libres en pivotement autour de leur axe d'articulation 24 ou fonctionner comme des suspensions amorties ; ils peuvent également être pivotés de force dans un sens ou dans l'autre pour descendre une roue (avant ou arrière) et soulever l'autre roue (arrière ou avant) de chaque côté du châssis.

Le pivotement d'un balancier 23 ou des deux balanciers 23, de façon groupée ou indépendante, permet de stabiliser le véhicule sur un terrain déformé, de soulever un côté par rapport à l'autre ou de soulever le châssis arrière 3 pour la mise en place ou l'enlèvement d'un équipement sur le châssis. Cet équipement peut être notamment une benne, une citerne, une grue ou une toupie bétonnière. L'équipement est en attente sur des béquilles ou un support dans une position permettant au châssis arrière du véhicule en position normale qui constitue la position basse (balancier horizontal) de s'engager sous l'équipement en attente.

Puis, il suffit de relever légèrement le châssis arrière par les balanciers pour que l'équipement soit en appui sur le châssis. Il est alors possible de l'amarrer par exemple aux chapes d'articulation 171 pour une benne, ses vérins étant articulés aux chapes 151. Après cette mise en place, on remonte légèrement le châssis arrière pour dégager l'équipement de son support ou on rétracte les béquilles et le véhicule peut alors emporter son équipement au-delà de cette position de montage/démontage de l'équipement, le châssis arrière étant de préférence remis au niveau normal.

La manoeuvre de démontage et de dépose de l'équipement se fait dans l'ordre inverse des opérations décrites ci-dessus.

Cette possibilité de montage/démontage rapide est intéressante pour de nombreuses applications, non seulement celles nécessitant un changement fréquent d'équipement sur un véhicule polyvalent mais aussi pour certains travaux de transport de liquides, de produits en vrac ou de charges palettisées, pour des opérations consistant à transporter le réceptacle (citerne, benne, plateau) avec sa charge pour déposer l'ensemble et reprendre un ensemble vide ou transporter un autre ensemble chargé.

Les divers branchements hydrauliques des moteurs associés à chacune des roues ou chacun des vérins ne sont pas représentés dans ces figures.

La figure 6 montre tout particulièrement l'avant du châssis arrière 3, sa partie d'articulation 51 d'axe ZZ et celle 52 d'axe XX.

Outre les moyens déjà décrits, cette figure montre un dispositif de sécurité pour le pivotement en torsion du châssis avant 1 et du châssis arrière 3 autour de l'axe horizontal XX, l'un par rapport à l'autre.

Le dispositif de sécurité se compose de deux ensembles symétriques 30, 31 par rapport au plan vertical médian (passant par les axes ZZ, XX, en position non pivotée).

Chaque ensemble 30, 31 se compose d'un pion 301, 311 porté par la traverse 15 (figure 2) et passant dans une ouverture curviligne 513, 514, centrée sur l'axe XX et coopérant avec deux contacts 302, 303 ; 312, 313, pour les actionner successivement en fonction du degré de pivotement relatif de la partie 51 par rapport au châssis arrière 3 autour de l'axe XX.

Après un certain pivotement autour de l'axe XX, par exemple le pion 301 rencontre le levier du contact 302 déclenchant alors un signal (contact de signalisation) pour indiquer au conducteur du véhicule que l'angle de torsion entre le châssis avant 1 et le châssis arrière 3 atteint sa limite pour ce sens de pivotement autour de l'axe XX. Ce signal invite le conducteur à arrêter sa manoeuvre ou à faire la manoeuvre inverse.

Si la torsion autour de l'axe XX augmente, le pion 301 actionne le contact 303 qui est un contact d'immobilisation. Ce contact d'immobilisation provoque le blocage de la manoeuvre et n'autorise plus que la manoeuvre inverse pour corriger cette torsion et la réduire.

L'ensemble 31 de l'autre côté fonctionne de la même manière mais pour une torsion autour de l'axe XX dans le sens inverse.

Ce dispositif de sécurité formé des ensemble 30, 31 permet se stabiliser le châssis arrière 3 lors des opérations de soulèvement de la benne, pour éviter que l'ensemble du véhicule ne risque de basculer accidentellement sur le côté.

En fonction de la manoeuvre en cours et du degré de torsion autour de l'axe XX, le conducteur averti par le fait que le mouvement est en limite, peut commander le basculement d'un balancier 23 pour corriger l'assiette du châssis arrière 3.

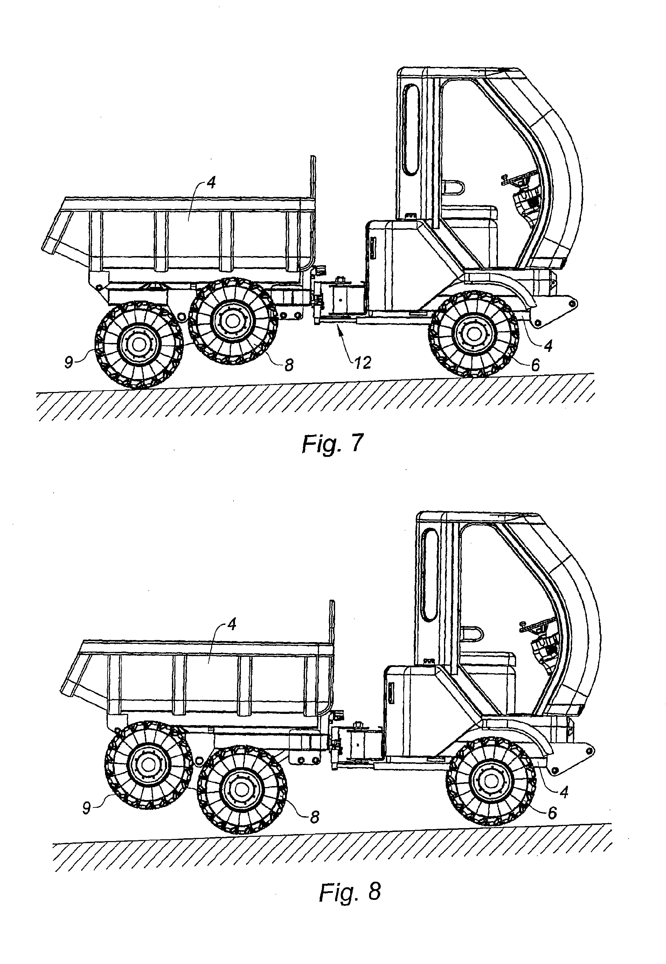

Les figures 7 et 8 montrent deux positions de basculement extrême du balancier : la figure 7 le balancier est relevé à l'avant jusqu'à venir par exemple en butée contre le longeron 13, la figure 8 montre le balancier relevé vers l'arrière jusqu'à venir en butée.

Comme pour ce mouvement le point d'appui est la roue avant, l'arrière du véhicule est plus soulevé dans la position de la figure 8 que dans celle de la figure 7.

## Revendications

1. Véhicule léger de chantier à au moins six roues motrices, comprenant
- un châssis avant équipé de roues motrices non directrices, et portant le poste de conduite,
- un châssis arrière équipé de roues motrices non directrices, recevant un équipement,
- une articulation d'axe vertical (ZZ) entre le châssis avant et le châssis arrière constituant une articulation de direction, une articulation d'axe horizontal entre les deux châssis, et au moins un vérin de direction reliant les deux parties de l'articulation de direction en laissant libre l'articulation horizontale,
**caractérisé en ce que**
- le châssis arrière (3) est équipé de deux paires de roues (8, 9) et de leur moteur hydraulique associé, les deux roues d'une paire étant portées chacune par l'extrémité d'un balancier (23) longitudinal, relié au châssis (3) par un axe d'articulation transversal (24),
- un vérin (28) monté entre le châssis (3) et le balancier (23) commandant la position du balancier autour de son articulation (24) par une bielle (27) solidaire du balancier (23) au niveau de son axe de pivotement (24) et reliée au vérin (28) prenant appui sur le châssis (3) pour pivoter le balancier (23).

2. Véhicule selon la revendication 1,
**caractérisé en ce que**
le balancier (23) est formé par un caisson plat muni à ses deux extrémités d'un boîtier cylindrique (21, 22) recevant un moteur hydraulique de roue et d'un axe d'articulation (24), situé entre les deux boîtiers cylindriques de roue (21, 22), et l'articulation (24) du balancier (23) est montée dans deux chapes (25, 26) du châssis arrière (3) (CH-AR).

3. Véhicule selon la revendication 1,
**caractérisé en ce que**
chaque côté du châssis arrière (3) (CH-AR) est formé par deux paires de longerons (13, 14) laissant entre eux un intervalle,
- le longeron extérieur (13) porte les deux chapes recevant l'axe d'articulation du balancier (23),
- l'axe du balancier (24) est muni solidairement d'une patte (27) venant dans l'intervalle des deux longerons du côté correspondant du châssis et
- le vérin d'articulation (28) du balancier (23) logé entre les longerons (13, 14) du côté correspondant du châssis (3) est articulé au châssis (3) et à la patte (27) du balancier (23).

4. Véhicule selon la revendication 1,
**caractérisé en ce que**
l'axe d'articulation (24) du balancier (23) est déporté au-delà du caisson du balancier (23) sur le côté du balancier tourné vers l'intérieur du châssis (3).

5. Véhicule selon la revendication 1,
**caractérisé en ce que**
le vérin (28) est relié à une commande comprenant un capteur de basculement autour de l'articulation horizontale (AR-TH) pour commander le vérin du balancier et corriger son basculement et ainsi le pivotement du châssis (3) autour de l'axe horizontal (AR-TH).

6. Véhicule selon la revendication 1,
**caractérisé en ce que**
en position de roulage, le circuit hydraulique du vérin (28) est relié à un amortisseur.

7. Véhicule selon la revendication 6,
**caractérisé par**
une électrovanne coupant le branchement de l'amortisseur sur le vérin pour la position de soulèvement/abaissement du balancier.

## Revendications modifiées

### Revendications modifiées conformément à la règle 86(2) CBE.

**1.** Véhicule léger de chantier à au moins six roues motrices, comprenant
- un châssis avant équipé de roues motrices non directrices,
- un châssis arrière (3) équipé de roues motrices non directrices,
- une articulation d'axe vertical (ZZ) entre le châssis avant et le châssis arrière (3) constituant une articulation de direction,
- le châssis arrière (3) est équipé de deux paires de roues (8, 9) et de leur moteur hydraulique associé, les deux roues d'une paire étant portées par chaque extrémité d'un balancier (23) longitudinal, relié au châssis (3) par un axe d'articulation transversal (24),
- un vérin (28) monté entre le châssis (3) et le balancier (23) commandant la position du balancier autour de son articulation (24) et reliée au vérin (28) prenant appui sur le châssis (3) pour pivoter le balancier (23),
**caractérisé en ce que**
- le châssis avant porte le poste de conduite et
- le châssis arrière reçoit un équipement,
- une articulation d'articulation d'axe horizontal entre les deux châssis, et au moins un vérin de direction reliant les deux parties de l'articulation de direction en laissant libre l'articulation horizontale,
- le vérin (28) monté entre le châssis (3) et le balancier (23) commande la position du balancier autour de son articulation (24).

**2.** Véhicule selon la revendication 1,
**caractérisé en ce que**
le balancier (23) est formé par un caisson plat muni à ses deux extrémités d'un boîtier cylindrique (21, 22) recevant un moteur hydraulique de roue et d'un axe d'articulation (24), situé entre les deux boîtiers cylindriques de roue (21, 22), et l'articulation (24) du balancier (23) est montée dans deux chapes (25, 26) du châssis arrière (3).

**3.** Véhicule selon la revendication 1,
**caractérisé en ce que**
chaque côté du châssis arrière (3) est formé par deux paires de longerons (13, 14) laissant entre eux un intervalle,
- le longeron extérieur (13) porte les deux chapes recevant l'axe d'articulation du balancier (23),
- l'axe du balancier (24) est muni solidairement d'une bielle (27) venant dans l'intervalle des deux longerons du côté correspondant du châssis et
- le vérin d'articulation (28) du balancier (23) logé entre les longerons (13, 14) du côté correspondant du châssis (3) est articulé au châssis (3) et à la bielle (27) du balancier (23).

**4.** Véhicule selon la revendication 1,
**caractérisé en ce que**
l'axe d'articulation (24) du balancier (23) est déporté au-delà du caisson du balancier (23) sur le côté du balancier tourné vers l'intérieur du châssis (3).

**5.** Véhicule selon la revendication 1,
**caractérisé en ce que**
le vérin (28) est relié à une commande comprenant un capteur de basculement autour de l'articulation horizontale pour commander le vérin du balancier et corriger son basculement et ainsi le pivotement du châssis (3) autour de l'axe horizontal.

**6.** Véhicule selon la revendication 1,
**caractérisé en ce que**
en position de roulage, le circuit hydraulique du vérin (28) est relié à un amortisseur.

**7.** Véhicule selon la revendication 6,
**caractérisé par**
une électrovanne coupant le branchement de l'amortisseur sur le vérin pour la position de soulèvement/abaissement du balancier.

**8.** Véhicule selon la revendication 1,
**caractérisé en ce que**
le circuit hydraulique des vérins et des balanciers est relié à deux ensemble symétriques (30, 31) constituant un dispositif de sécurité pour le pivotement du châssis arrière autour de l'axe horizontal XX, chaque ensemble (30, 31) se composant d'un pion (301, 311) porté par une partie fixe du châssis arrière (3) et coopérant avec au moins un contact (302, 303 ; 312, 313) pour porter la partie (51) de l'articulation horizontale solidaire du châssis avant, pour actionner successivement l'un des contacts en fonction du degré de pivotement du châssis arrière par rapport à l'axe XX et interdire tout pivotement excessif ou commander l'inversion du mouvement de pivotement par les vérins (28) d'actionnement des balanciers (23).
